# DEMANDE DE BREVET EUROPEEN

(11) **EP 0 676 637 A1**
(43) Date de publication de la demande: **11.10.1995**
(21) Numéro de dépôt: 95400723.3
(22) Date de dépôt: 31.03.1995
(51) Int. Cl.: G01N 27/42, G01N 27/00

(54) **Procédé et dispositif pour la mesure de la variation de la masse d'une électrode au cours d'une réaction électrochimique ou chimique**

(30) Priorité: 06.04.1994 FR 9404005
(71) Demandeur: CENTRE NATIONAL DE LA RECHERCHE SCIENTIFIQUE (CNRS), 75016 Paris (FR)
(72) Inventeur: Maurin, Georges, F-94240 L'Hay-les-Roses (FR); Toque, Jean-Pierre, F-92120 Montrouge (FR); Perrot, Hubert, F-91190 Gif-sur-Yvette (FR); Bouet, Véronique, F-95800, Cergy-Saint-Christophe (FR); Gabrielli, Claude, F-92000 Nanterre (FR)
(74) Mandataire: Sueur, Yvette

(57) **Abrégé**

L'invention concerne un procédé et un dispositif pour mesurer la variation de la masse d'une électrode au cours d'une réaction électrochimique ou chimique.

Le dispositif est constitué par une cellule électrochimique qui comprend des moyens pour amener l'électrolyte sous forme de jet sur l'électrode de travail, perpendiculairement à la surface de ladite électrode et des moyens pour évacuer l'électrolyte, et il est caractérisé en ce que les moyens pour amener l'électrolyte sur l'électrode de travail, dont le diamètre est D, sont constitués par une buse dont l'extrémité de sortie a un diamètre d et est située à une distance H de la surface de l'électrode de travail, d, D et H étant tels que d≧ ½D et 0,5 d ≦ H ≦ 3 d ; le dispositif comprend une microbalance à quartz adaptée à l'électrochimie, et l'électrode de travail est constituée par l'une des électrodes excitatrices du cristal de quartz de la microbalance à quartz.

## Description

La présente invention concerne un procédé et un dispositif pour la mesure de la variation de la masse d'une électrode au cours d'une réaction électrochimique ou chimique.

On connaît l'intérêt des cellules électrochimiques à jet submergé pour des applications microanalytiques. De telles cellules à jet submergé sont décrites notamment par Chin et al., J. Electrochem. Soc. , Vol. 125, N°9, 1461-1470, 1978, et par V. Bouet et al., J. Electroanal. Chem., 340 (1992) 325-331.

Par C. Gabrielli, et al., J. of Electroch. Soc., vol. 138, n° 9, Sept. 1991, 2657-2660, on connaît l'utilisation des cristaux de quartz comme capteurs en phase liquide. Dans un processus électrochimique, une variation de la valeur de la fréquence de résonance du quartz peut être attribuée à un changement de masse de l'électrode. Les cristaux de quartz peuvent donc être utilisés pour mesurer une variation de masse lors du procédé de dépôt d'une couche sur un substrat ou lors de la dissolution d'une couche, par exemple pour contrôler les modifications de la masse d'une électrode (par exemple dépôt d'Ag à partir d'un bain HNO₃).

Une telle technique présente toutefois des inconvénients dans la mesure où l'électrode n'est pas uniformément accessible aux ions en mouvement.

Différentes tentatives ont été faites pour supprimer cet inconvénient et des améliorations ont été apportées en créant un mouvement relatif entre la microbalance à quartz et l'électrolyte.

Ainsi, A. Grzegorzewski, et al., J. Electroanal. Chem., 228 (1987) 455-470, décrivent un dispositif dans lequel on a fixé le cristal de quartz sur une électrode tournante, constituée par un cylindre en acier inoxydable dans lequel l'oscillateur de la balance à quartz est inséré. Il s'agit toutefois d'un dispositif complexe dont un inconvénient essentiel réside dans la difficulté technique d'assurer les diverses connections électriques par des contacts rotatifs.

S. Hessami, et al., Congrès de l'Electrochemical Soc., Toronto, 1992 Abstract n° 365, proposent un dispositif comprenant une cellule électrochimique dans laquelle un jet d'électrolyte est envoyé sur l'électrode de travail portant le cristal de quartz, à travers un fritté, pour renouveler l'électrolyte dans la région de l'électrode. Le dispositif est utilisé notamment pour le dépôt et la dissolution de films minces de cuivre ou de nickel à partir d'une solution de sulfate. Un tel dispositif présente toutefois de nombreux inconvénients. Le fritté introduit des microturbulences à l'échelle locale, ce qui s'oppose à l'établissement d'un véritable régime laminaire. En outre, la contre-électrode et l'électrode de référence du circuit électrochimique ont été placées en amont du fritté, ce qui induit deux problèmes. D'une part, le courant électrique doit passer dans les porosités du fritté, ce qui provoque une forte chute ohmique qui perturbe le contrôle du potentiel électrochimique. D'autre part, les espèces chimiques susceptibles de se former à la contre-électrode sont entraînées par le jet vers l'électrode de travail et peuvent y être l'objet de réactions électrochimiques parasites. En outre, deux frittés n'étant jamais identiques, les résultats ne sont pas reproductibles d'un dispositif à l'autre.

C. Hildebrand, et al., Congrès de Electroch. Soc., Nouvelle-Orléans (1993), Abstract n° 219, décrivent un dispositif dans lequel un plateau portant le cristal de quartz est immobile, alors que l'électrolyte au-dessus du quartz est mis en mouvement à l'aide d'un plateau tournant parallèle au disque de cristal de quartz. Cependant, dans ce dispositif, l'électrode de travail n'est pas uniformément accessible au transport de masse, et les mesures de masse en sont affectées.

La présente invention a pour but de pallier les inconvénients des dispositifs de l'art antérieur et de fournir un dispositif et un procédé qui permettent de mesurer avec une grande précision et de manière reproductible, la variation de masse sur une électrode en contact avec un électrolyte dans des conditions telles que l'électrode soit uniformément accessible aux ions diffusant dans la solution.

La présente invention a pour objet un dispositif pour la mesure de la variation de la masse sur une électrode au cours d'une réaction électrochimique ou chimique, ledit dispositif étant constitué par une cellule électrochimique qui comprend une électrode de référence, une électrode de travail reliée à la masse, une contre-électrode, un potentiostat, des moyens pour faire circuler l'électrolyte à travers la cellule, des moyens pour amener l'électrolyte sous forme de jet sur l'électrode de travail, perpendiculairement à la surface de ladite électrode de travail et des moyens pour évacuer l'électrolyte, caractérisé en ce que :
- les moyens pour amener l'électrolyte sur l'électrode de travail, dont le diamètre est D, sont constitués par une buse dont l'extrémité de sortie a un diamètre d et est située à une distance H de la surface de l'électrode de travail, d, D et H étant tels que d≧½ D et 0,5 d ≦ H ≦ 3 d ;
- le dispositif comprend une microbalance à quartz adaptée à l'électrochimie ;
- l'électrode de travail est constituée par l'une des électrodes excitatrices du cristal de quartz de la microbalance à quartz.

Le respect des conditions énoncées ci-dessus pour d, D et H permet d'obtenir, entre la sortie de la buse et la face supérieure du cristal de quartz de la microbalance, une zone de stagnation du jet dans laquelle l'électrode de travail portée par le cristal est uniformément accessible au transport de matière.

De préférence, les moyens pour faire circuler l'électrolyte dans la cellule électrochimique sont choisis de telle sorte qu'ils permettent un contrôle précis du jet qui arrive sur l'électrode de travail. De tels moyens peuvent être constitués par une pompe volumétrique à engrenage. Cette pompe est couplée magnétiquement à un moteur à courant continu piloté par un asservissement électronique. Le débit d'une pompe à engrenage étant proportionnel à sa vitesse de rotation, le dispositif ne requiert pas de débitmètre ou de robinet volumétrique. L'utilisation d'une pompe volumétrique à engrenage permet d'ajuster le débit du jet à une valeur donnée avec une précision de l'ordre de 1%, de le maintenir à une valeur constante pendant une longue durée et de supprimer les pulsations périodiques ou les fluctuations erratiques.

La longueur de la buse est, de préférence, égale à au moins 10 fois son diamètre, plus particulièrement égale à au moins 20 fois son diamètre, pour garantir un régime hydrodynamique stable.

De manière classique, la microbalance à quartz est constituée par un disque de quartz comprenant une électrode excitatrice sur chacune de ses faces, un circuit électronique d'oscillation chargé d'entretenir les oscillations à la fréquence du dispositif, une unité électronique de contrôle permettant de mettre en forme les signaux électriques et un fréquencemètre. Dans le dispositif de la présente invention, le circuit d'oscillation est en outre conçu de telle sorte que l'électrode de travail soit reliée à la masse, qu'il puisse entretenir les oscillations du quartz en milieu liquide et en présence d'un dépôt dont l'épaisseur peut aller jusqu'à quelques dizaines de microns sur l'électrode.

Dans un mode de réalisation du dispositif de la présente invention, l'électrode de travail est constituée par exemple par un disque métallique, de préférence par un disque d'or, qui est l'une des électrodes excitatrices de cristal de quartz.

Dans un autre mode de réalisation du dispositif de la présente invention, la face du cristal de quartz de la microbalance qui est en contact avec l'électrolyte porte une électrode du type disque-anneau. Une telle électrode est constituée par une électrode centrale en forme de disque entourée par un anneau métallique. L'électrode centrale joue à la fois le rôle d'électrode excitatrice pour le cristal de quartz et d'électrode de travail pour la cellule électrochimique. Le diamètre extérieur de l'anneau est tel que l'anneau aussi bien que l'électrode centrale sont situés dans la zone de stagnation du jet. L'anneau est connecté par des contacts supplémentaires à un second potentiostat et il est polarisé à un potentiel tel qu'il permet de détecter électrochimiquement des espèces qui sont formées à la surface de l'électrode de travail et qui sont éjectées par le flux d'électrolyte.

L'utilisation d'une électrode du type disque-anneau est possible parce que l'écoulement du jet est parfaitement contrôlé. Un tel couplage permet d'effectuer à l'aide du même dispositif, des mesures gravimétriques et des mesures analytiques.

La présente invention sera expliquée plus en détail par référence aux dessins.

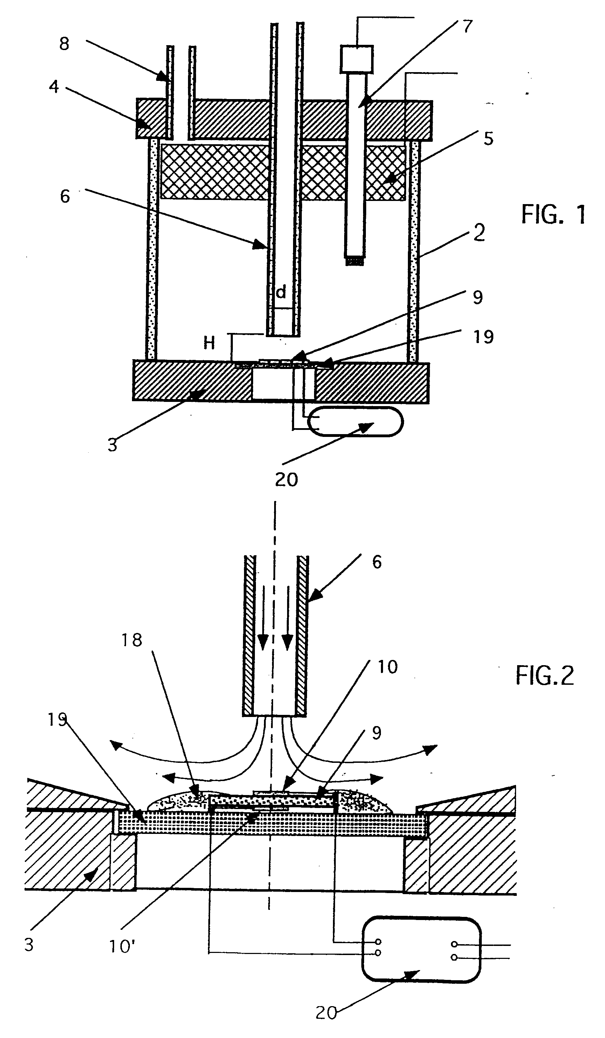

La figure 1 représente la cellule électrochimique faisant partie du dispositif de la présente invention.

La figure 2 représente une vue agrandie de la zone de l'électrode de travail de la cellule électrochimique de la figure 1

La figure 3 représente une vue d'ensemble schématisée d'un dispositif selon l'invention.

Le dispositif de la présente invention tel que représenté sur les figures comprend une cellule électrochimique 1. La cellule 1 comporte une paroi verticale cylindrique 2, un fond 3 et un couvercle 4. Le couvercle 4 comporte une ouverture pour la buse 6 pour l'introduction de l'électrolyte, une ouverture pour le passage de l'électrode de référence 7 et une ouverture pour la sortie 8 de l'électrolyte. La buse 6 pour l'introduction de l'électrolyte est, de préférence, un tube de verre de 7 mm de diamètre coaxial avec l'axe de la cellule, et perpendiculaire au fond de la cellule. Une contre-électrode 5, constituée par une grille métallique, de préférence en platine, est fixée au couvercle 4 ou à la paroi 2. Un cristal de quartz 9 de coupe AT est fixé sur le fond 3. Il comprend deux électrodes excitatrices 10 et 10', une sur chacune de ses faces, constituées par un disque d'or ayant un diamètre de 5 mm. L'électrode excitatrice 10 qui est en contact avec l'électrolyte, constitue en outre l'électrode de travail. Le cristal de quartz 9 est un disque de 16 mm de diamètre ayant une fréquence de résonance de 6 Mhz et il est fixé à l'aide d'une colle silicone 18 sur une plaque verre-époxy 19 qui assure les liaisons électriques par l'intermédiaire de contacts en adhésif d'argent. Le cristal de quartz 9 et ses électrodes excitatrices (et donc l'électrode de travail 10) sont centrés sur l'axe de la cellule et se trouvent donc à l'aplomb du jet issu de la buse 6. La distance H entre la sortie de la buse 6 qui a un diamètre d = 7 mm et l'électrode de travail 10 est de préférence de 14 mm. L'électrode de travail se trouve entièrement dans la zone de stagnation de la cellule.

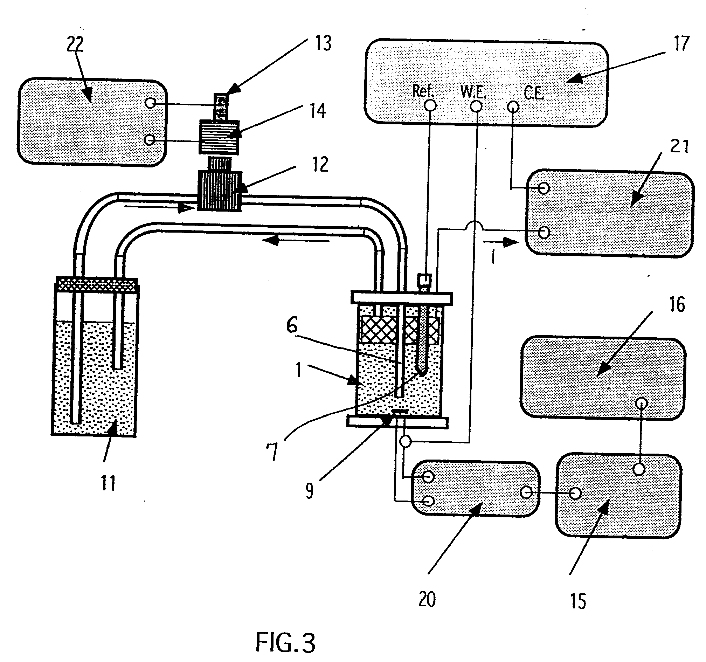

Ainsi qu'il apparaît sur la figure 3, la buse 6 pour l'introduction de l'électrolyte dans la cellule est reliée en amont à un réservoir 11 à partir duquel elle est alimentée par l'intermédiaire d'une pompe à engrenage 12 actionnée par un moteur à courant continu 14 dont la rotation est pilotée électroniquement par l'intermédiaire d'une dynamo tachymétrique 13, l'ensemble étant contrôlé par une unité de contrôle moteur 22.

Le cristal de quartz est relié à un circuit d'oscillateur électronique 20 conçu pour entretenir les vibrations du quartz, même lorsque l'électrode de travail 10 porte une couche métallique de quelques microns d'épaisseur. L'oscillateur 20 est relié par l'intermédiaire d'une unité de contrôle de la microbalance 15 à un fréquencemètre 16 qui permet de mesurer la fréquence de l'oscillateur 20. Le fréquencemètre 16 peut être un compteur Schlumberger® 2721 ayant une précision de 0,1 Hz à 6 MHz. L'électrode de travail 10 est mise à la terre et elle est reliée à un potentiostat 17 qui permet de piloter son potentiel par rapport à l'électrode de référence 7 au sulfate de mercure. La charge coulométrique qui traverse la cellule électrochimique est mesurée à l'aide d'un intégrateur 21. L'ensemble du dispositif peut être contrôlé par un microordinateur non représenté auquel sont reliés l'intégrateur 21 et le fréquencemètre 16 qui maintient les paramètres électrochimiques de fonctionnement et qui enregistre les données numériques.

La présente invention permet de mesurer in situ la variation de masse dans un liquide en mouvement, la dite variation de masse résultant d'un processus électrochimique ou chimique et se traduisant soit par un dépôt, soit par une dissolution.

Le dispositif a un temps de réponse inférieur à 0,5 seconde ce qui permet de suivre en temps réel les variations de masse résultant d'un phénomène évoluant rapidement. Par exemple, le procédé et le dispositif de la présente invention permettent de déterminer in situ, dans des conditions hydrodynamiques définies :
- des variations de masse résultant de la formation par voie électrochimique ou chimique d'une couche sur l'électrode de travail, cette couche pouvant être un métal, un alliage métallique ou semi-conducteur, un composé (sel, oxide...), un polymère.
- des variations de masse résultant de la corrosion ou de la dissolution par voie électrochimique ou chimique du matériau de l'électrode ou d'une couche préalablement déposée sur l'électrode de travail.
- le pouvoir entartrant d'une eau naturelle ou d'usage industriel à partir de la mesure in-situ de la vitesse de précipitation chimique du carbonate de calcium résultant de la réduction électrochimique de l'oxygène moléculaire dissous, dont la concentration interfaciale est contrôlée par le débit du jet.

Le dispositif de la présente invention peut par exemple être utilisé pour déterminer le rendement faradique de la formation d'un dépôt de nickel sur l'électrode de travail par électrolyse d'une solution de Watts, et pour évaluer l'effet de l'écoulement du liquide sur le rendement faradique. La microbalance à quartz constituée par le cristal de quartz est étalonnée au préalable en mesurant la variation de fréquence Δf en fonction de la variation de masse Δm, telle que déduite de la loi de Faraday, pendant le dépôt cathodique de cuivre à partir d'une solution de sulfate acide de cuivre.

Pour effectuer le dépôt de nickel sur l'électrode de travail fixée sur le cristal de quartz, on a utilisé comme électrolyte une solution de Watts constituée par NiSO₄, 7H₂O (300 g/l), NiCl₂ (35 g/l), H₃BO₃ (40 g/l) ayant un pH entre 2 et 4,5. Le dépôt électrolytique a été effectué à température ambiante dans des conditions potentiostatiques.

Plusieurs essais ont été réalisés, en utilisant des débits d'électrolyte différents et des pH différents. Les résultats obtenus font apparaître qu'à pH inférieur à 3,5, une augmentation du débit d'électrolyte se traduit par une réduction du rendement faradique sous l'effet de la réduction des ions H⁺, tandis qu'à pH supérieur à 3,5, l'hydrogène formé à la cathode résultant de la réduction de l'eau, le rendement est indépendant du débit d'électrolyte.

Ces résultats obtenus de manière simple et rapide à l'aide du dispositif de l'invention, sont en accord avec ceux qui avaient été obtenus par une technique de mesure de masse ex situ très délicate consistant après chaque expérience à dissoudre le nickel déposé sur une électrode tournante, et à mesurer sa quantité par analyse spectroscopique du soluté [R.K. Dorsch, Simultaneous electrodeposition of nickel and hydrogen on a rotating disk electrode, J. Electroanalytical Chemistry, 21, (1969) p.495-508].

## Revendications

1. Dispositif pour la mesure de la variation de la masse sur une électrode au cours d'une réaction électrochimique ou chimique, ledit dispositif étant constitué par une cellule électrochimique qui comprend une électrode de référence, une électrode de travail reliée à la masse, une contre-électrode, un potentiostat, des moyens pour faire circuler l'électrolyte à travers la cellule, des moyens pour amener l'électrolyte sous forme de jet sur l'électrode de travail, perpendiculairement à la surface de ladite électrode de travail et des moyens pour évacuer l'électrolyte, caractérisé en ce que :
- les moyens pour amener l'électrolyte sur l'électrode de travail, dont le diamètre est D, sont constitués par une buse dont l'extrémité de sortie a un diamètre d et est située à une distance H de la surface de l'électrode de travail, d, D et H étant tels que d≧½ D et 0,5 d ≦ H ≦ 3 d ;
- le dispositif comprend une microbalance à quartz adaptée à l'électrochimie ;
- l'électrode de travail est constituée par l'une des électrodes excitatrices du cristal de quartz de la microbalance à quartz.

2. Dispositif selon la revendication 1, caractérisé en ce que les moyens pour faire circuler l'électrolyte dans la cellule électrochimique sont constitués par une pompe à engrenage.

3. Dispositif selon la revendication 1, caractérisé en ce que la microbalance à quartz comporte un disque de quartz comprenant une électrode excitatrice sur chacune de ses faces, un circuit électronique d'oscillation chargé d'entretenir les oscillations à la fréquence du dispositif, une unité électronique de contrôle permettant de mettre en forme les signaux électriques et un fréquencemètre, le circuit d'oscillation étant conçu de telle sorte que l'électrode de travail soit reliée à la masse et que le dit circuit d'oscillation puisse entretenir les oscillations du quartz en milieu liquide et en présence d'un dépôt sur l'électrode.

4. Dispositif selon la revendication 1, caractérisé en ce que l'électrode excitatrice du cristal de quartz qui constitue l'électrode de travail est un disque d'or déposé sur le cristal de quartz.

5. Dispositif selon la revendication 1, caractérisé en ce que l'électrode excitatrice du cristal de quartz qui est en contact avec l'électrolyte est une électrode du type disque-anneau, constituée par une électrode centrale en forme de disque entourée par un anneau.

6. Procédé pour la mesure de la variation de la masse sur une électrode au cours d'une réaction électrochimique ou chimique dans une cellule électrochimique, au cours duquel l'électrolyte circule à travers la cellule électrochimique, caractérisé en ce qu'il consiste :
- à amener l'électrolyte sous forme de jet sur l'électrode de travail, perpendiculairement à la surface de ladite électrode de travail dont le diamètre est D, par l'intermédiaire d'une buse dont l'extrémité de sortie a un diamètre d et est située à une distance H de la surface de l'électrode de travail, d, D et H étant tels que d≧½ D et 0,5 d ≦ H ≦ 3 d, de sorte à créer une région de stagnation au-dessus de la surface de l'électrode de travail, assurant un transport de matière uniforme ;
- et à mesurer la variation de masse par l'intermédiaire d'une microbalance électronique à quartz couplée à l'électrode de travail.

7. Procédé selon la revendication 6, caractérisé en ce que l'électrolyte est mis en circulation par une pompe à engrenage.

8. Procédé selon la revendication 6, caractérisé en ce qu'on effectue des mesures qualitatives par l'intermédiaire d'une électrode de travail du type disque-anneau.

9. Procédé selon la revendication 6, appliqué à la détermination des variations de masse résultant de la formation par voie électrochimique ou chimique d'une couche sur l'électrode de travail, cette couche pouvant être un métal, un alliage métallique ou semi-conducteur, un composé (sel, oxide...), un polymère, ou des variations de masse résultant de la corrosion ou de la dissolution par voie électrochimique ou chimique du matériau de l'électrode ou d'une couche préalablement déposée sur l'électrode de travail.

10. Procédé selon la revendication 6, appliqué à la détermination du pouvoir entartrant d'une eau naturelle ou d'usage industriel à partir de la mesure in-situ de la vitesse de précipitation chimique du carbonate de calcium résultant de la réduction électrochimique de l'oxygène moléculaire dissous, dont la concentration interfaciale est contrôlée par le débit du jet.
